# FASCICULE DE BREVET EUROPEEN

(11) **EP 0 860 593 B1**
(45) Date de publication et mention de la délivrance du brevet: **03.09.2003**
(21) Numéro de dépôt: 98400381.4
(22) Date de dépôt: 18.02.1998
(51) Int. Cl.: F02C 6/20, F02C 3/107, F02K 3/04

(54) **Système de compression pour une turbomachine**
Kompressionssystem für eine Turbomaschine
Compression system for a turbomachine

(30) Priorité: 20.02.1997 FR 9701998
(43) Date de publication de la demande: 26.08.1998
(73) Titulaire: Snecma Moteurs, 75015 Paris (FR)
(72) Inventeur: Lardellier, Alain Marie Joseph, 77000 Melun (FR)

(56) Documents cités:
- EP-A- 0 570 217
- DE-B- 1 003 514
- DE-C- 868 809
- FR-A- 1 107 990
- FR-A- 2 076 450
- FR-A- 2 573 816
- GB-A- 588 096
- US-A- 2 583 872
- US-A- 2 947 364
- US-A- 2 955 424
- US-A- 3 121 526

## Description

L'invention concerne une turbomachine comportant un système de compression optimisé. Elle s'applique en particulier aux turbopropulseurs ou aux turbosoufflantes.

Les turbopropulseurs ou les turbosoufflantes double corps classiques comportent généralement des groupes rotors de basse pression et de haute pression à rotation indépendante, chaque groupe comportant un compresseur et une turbine entraînant ce compresseur, le compresseur basse pression refoulant au moins en partie dans le compresseur haute pression et la turbine basse pression étant montée en aval de la turbine haute pression ; le groupe rotor basse pression est soit relié' à une hélice par l'intermédiaire d'un réducteur (cas du turbopropulseur) comme décrit notamment dans le document FR-A-1 107 990, soit directement à une soufflante (cas de la turbosoufflante).

Cependant, pour les moteurs à rapport de compression élevé, cette structure nécessite d'utiliser un nombre important d'étages de compresseur et de turbine, ce qui augmente le coût du moteur.

Pour diminuer le nombre d'étages des compresseurs, il est connu d'utiliser une turbomachine triple corps qui permet de répartir la compression sur trois compresseurs entraînés respectivement par trois turbines. Cependant, une structure à triple corps est complexe et demeure d'un coût élevé.

Le but de l'invention est de réaliser une turbomachine dont l'architecture permet de réduire le nombre d'étages de compresseur et de turbine par une meilleure adaptation des vitesses des compresseurs haute et basse pression et qui demeure moins complexe et moins chère que les turbomachines à triple corps.

Pour cela l'invention consiste à entraîner le compresseur basse pression par la turbine haute pression par l'intermédiaire d'un réducteur de vitesse.

L'utilisation d'un réducteur de vitesse pour entraîner le compresseur basse pression permet d'optimiser le travail des compresseurs et des turbines en adaptant leurs régimes de rotation et permet ainsi une réduction du nombre d'étages des compresseurs et des turbines.

Selon l'invention, la turbomachine à système de compression optimisé comportant une turbine à haute pression entraînant un premier compresseur à haute pression est caractérisée en ce qu'elle comporte en outre au moins un deuxième compresseur à basse pression entraîné par la turbine à haute pression par l'intermédiaire d'un réducteur de vitesse.

D'autres particularités et avantages de l'invention apparaitront clairement dans la suite de la description donnée à titre d'exemple non limitatif et faite en regard des figures annexées qui représentent :
- la figure 1, une demi-coupe longitudinale axiale d'un premier exemple d'architecture de turbomachine selon un premier mode de réalisation de l'invention,
- la figure 2, une demi-coupe longitudinale axiale d'une première variante de réalisation de l'invention,
- la figure 3, une demi-coupe longitudinale axiale d'une deuxième variante de réalisation de l'invention,
- la figure 4, une demi-coupe longitudinale axiale d'un deuxième exemple d'architecture de turbomachine selon un deuxième mode de réalisation de l'invention.

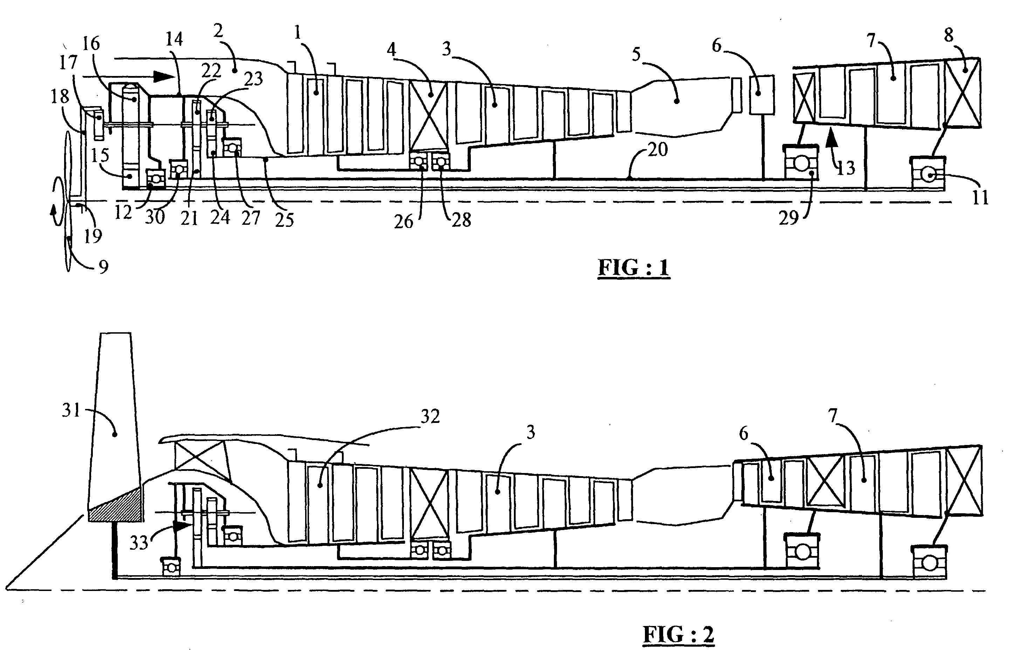

Dans toute la description, les termes haute, moyenne et basse pression sont utilisés de manière relative les uns par rapport aux autres. La turbomachine représentée sur la figure 1 comporte un compresseur basse pression 1 relié à une entrée d'air annulaire 2. La sortie du compresseur basse pression est reliée à un compresseur haute pression 3 par l'intermédiaire d'un carter intermédiaire 4. En sortie du compresseur haute pression 3, l'air comprimé passe dans une chambre de combustion 5 qui alimente en gaz chauds des turbines haute et basse pression 6, 7. Un carter d'échappement des gaz 8 est disposé en aval de la turbine basse pression 7.

La turbine basse pression 7 est reliée à une hélice 9 par un arbre basse pression 10 et par l'intermédiaire d'un premier réducteur de vitesse monté dans l'enceinte avant de la turbomachine. La turbine basse pression 7 et l'arbre basse pression 10 sont supportés par des paliers 11, 12, les paliers 11, 12 étant respectivement supportés par le carter 8 d'échappement des gaz et par le carter 14 du réducteur de vitesse. Le premier réducteur de vitesse entraînant l'hélice est de type connu. Sur l'exemple représenté sur la figure 1, le premier réducteur de vitesse comporte une première couronne dentée 15 solidaire de l'arbre basse pression 10 de la turbine basse pression 7, la première couronne dentée 15 entraînant des satellites, chaque satellite comportant un premier et un deuxième pignons dentés 16, 17. Le deuxième pignon denté 17 engrène avec une deuxième couronne dentée 18 solidaire d'un arbre 19 supportant l'hélice 9.

La turbine haute pression 6 est reliée au compresseur haute pression 3 par un arbre haute pression 20. La turbine haute pression 6 entraine aussi le compresseur basse pression 1 par l'intermédiaire d'un deuxième réducteur de vitesse monté dans l'enceinte avant de la turbomachine permettant d'optimiser le régime de rotation du compresseur basse pression 1. Le deuxième réducteur de vitesse comporte une troisième couronne dentée 21 solidaire de l'arbre haute pression 20, la troisième couronne dentée 21 entrainant des satellites, chaque satellite comportant un troisième et un quatrième pignons dentés 22, 23, le quatrième pignon denté 23 engrènant avec une quatrième couronne dentée 24 fixée sur un arbre 25 relié au compresseur basse pression 1.

Le compresseur basse pression est supporté par des paliers 26, 27 fixés respectivement sur le carter intermédiaire 4 et sur le carter 14 des deux réducteurs de vitesse.

Le compresseur haute pression 3, la turbine haute pression 6 et l'arbre haute pression 20 sont supportés par des paliers 28, 29, 30 fixés respectivement sur le carter intermédiaire 4, sur le carter 13 de la turbine basse pression 7 et sur le carter 14 des deux réducteurs de vitesse.

La première variante de la turbomachine représentée sur la figure 2 est de structure similaire à celle représentée sur la figure 1. L'hélice a été remplacée par une soufflante 31 et le premier réducteur de vitesse a été supprimé. La soufflante est donc directement entraînée par la turbine basse pression 7. Le compresseur basse pression est remplacé par un compresseur à moyenne pression 32 qui est entraîné par la turbine haute pression 6 par l'intermédiaire d'un réducteur de vitesse 33 situé dans l'enceinte avant de la turbomachine. Cette structure présente l'intérêt de répartir judicieusement la compression entre les compresseurs moyenne pression et haute pression en adaptant leurs régimes de rotation de façon à obtenir l'efficacité maximale avec le minimum d'étages.

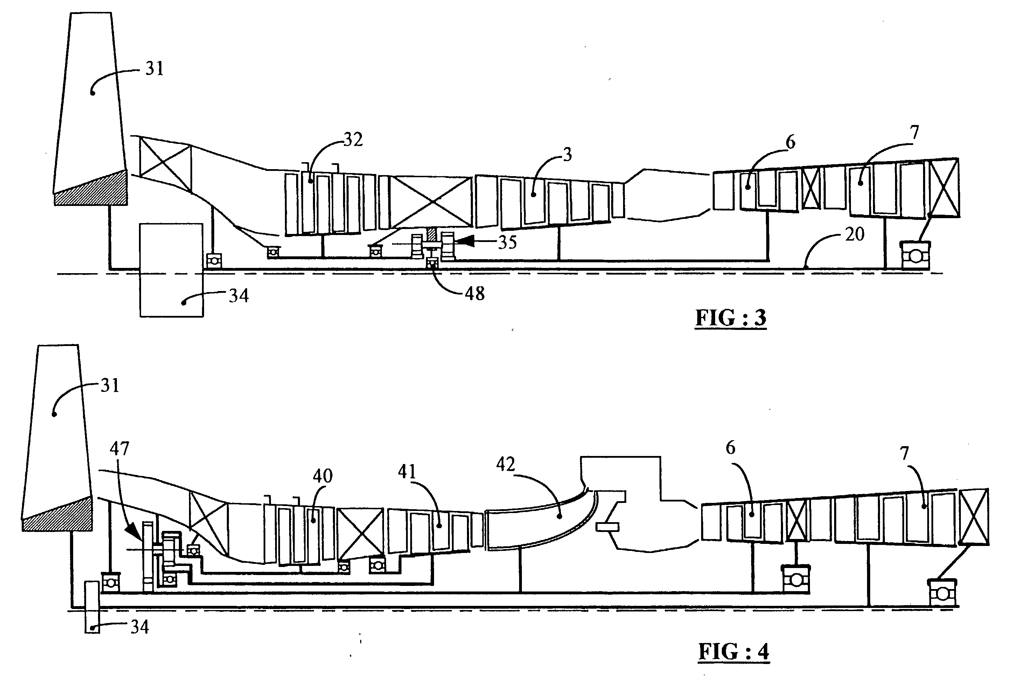

La deuxième variante de la turbomachine représentée sur la figure 3 est de structure similaire à celle représentée sur la figure 1. L'hélice est remplacée par une soufflante 31 comme sur la figure 2, mais elle est entraînée par la turbine basse pression 7 par un premier réducteur de vitesse 34 situé dans l'enceinte avant de la turbomachine.

L'utilisation d'une soufflante entrainée par l'intermédiaire d'un réducteur n'est pas limitatif, la turbine basse pression 7 peut également, comme représenté sur les figures 1 et 2, soit entrainer une hélice par l'intermédiaire d'un réducteur, soit entraîner directement une soufflante.

Le compresseur à moyenne pression 32 est entraîné par la turbine haute pression 6 par l'intermédiaire d'un deuxième réducteur de vitesse 35 localisé entre les compresseurs à moyenne pression 32 et à haute pression 3. La localisation du deuxième réducteur de vitesse est particulièrement avantageuse au point de vue dynamique car elle permet de réduire la longueur de l'arbre haute pression 20 et de disposer d'un roulement 48 servant de support à l'arbre basse pression 10. Pour obtenir le même résultat avec les architectures déjà décrites (figures 1 et 2), il serait nécessaire de disposer un roulement inter-arbre entre les arbres haute et basse pression 20 et 10.

Les architectures de turbomachine représentées sur les figures 1 à 3 permettent de répartir la compression sur deux compresseurs axiaux.

L'invention s'applique également à une turbomachine comportant un nombre de compresseurs supérieur à deux. La figure 4 montre un exemple d'architecture de turbomachine comportant deux compresseurs axiaux à basse et moyenne pression 40, 41 et un compresseur centrifuge à haute pression 42.

La turbine basse pression 7 entraîne une soufflante 31 par l'intermédiaire d'un premier réducteur de vitesse 34. La turbine haute pression 6 entraîne directement le compresseur centrifuge à haute pression 42 et entraîne les compresseurs axiaux à basse et moyenne pression 40, 41 par l'intermédiaire d'un deuxième réducteur de vitesse 47. Les premier et deuxième réducteurs de vitesse 34, 47 sont localisés dans l'enceinte avant de la turbomachine.

L'invention n'est pas limitée aux exemples de réalisation précisément décrits. Notamment les arrangements des réducteurs de vitesse représentés sur les figures 1 à 4 ne sont pas limitatifs et d'autres arrangements peuvent être utilisés. De même la localisation du réducteur de vitesse entraînant les compresseurs basse et/ou moyenne pression peut être différente. Le nombre de compresseurs peut être supérieur à trois.

## Revendications

1. Turbomachine à système de compression optimisé comportant une turbine à haute pression entraînant un premier compresseur à haute pression, une hélice (9) entraînée par une turbine à basse pression (7) par l'intermédiaire d'un premier réducteur de vitesse (15, 16, 17, 18) et au moins un deuxième compresseur à basse pression (1) **caractérisé en ce que** le deuxième compresseur à basse pression est entraîné par la turbine à haute pression (6) par l'intermédiaire d'un deuxième réducteur de vitesse (21, 22, 23, 24).

2. Turbomachine à système de compression optimisé comportant une turbine à haute pression entraînant un premier compresseur à haute pression **caractérisée en ce qu'**elle comporte en outre une soufflante (31) entraînée par une turbine à basse pression (7) par l'intermédiaire d'un premier réducteur de vitesse (15, 16, 17, 18) et au moins un deuxième compresseur à basse pression (1) entraîné par la turbine à haute pression (6) par l'intermédiaire d'un deuxième réducteur de vitesse (21, 22, 23, 24).

3. Turbomachine selon la revendication 2, **caractérisée en ce que** la soufflante (31) est entraînée directement par la turbine à basse pression (7).

4. Turbomachine à système de compression optimisé comportant une turbine à haute pression entraînant un premier compresseur à haute pression, une hélice (9) entraînée par une turbine à basse pression (7) par l'intermédiaire d'un premier réducteur de vitesse (15, 16, 17, 18), **caractérisé en ce qu'**elle comporte au moins un deuxième compresseur à moyenne pression (32) entraîné par la turbine à haute pression (6) par l'intermédiaire d'un deuxième réducteur de vitesse (21, 22, 23, 24).

5. Turbomachine selon la revendication 1 **caractérisée en ce qu'**elle comporte un deuxième compresseur à basse pression (40) et un troisième compresseur à moyenne pression (41), le deuxième et le troisième compresseur étant entraînés par la turbine à haute pression (6) par l'intermédiaire du deuxième réducteur de vitesse.

6. Turbomachine selon l'une quelconque des revendications 1 à 5, **caractérisée en ce que** le deuxième réducteur de vitesse est localisé dans une enceinte avant de la turbomachine.

7. Turbomachine selon l'une quelconque des revendications 4 ou 5, **caractérisée en ce que** le deuxième réducteur de vitesse est localisé entre les compresseurs moyenne et haute pression.

## Patentansprüche

1. Turbomaschine mit optimiertem Verdichtungssystem mit einer Hochdruckturbine, die einen als Hochdruckverdichter ausgebildeten ersten Verdichter antreibt, mit einem von einer Niederdruckturbine (7) über ein erstes Untersetzungsgetriebe (15, 16, 17, 18) angetriebenen Propeller (9) und mit wenigstens einem als Niederdruckverdichter ausgebildeten zweiten Verdichter (1), **dadurch gekennzeichnet, daß** der als Niederdruckverdichter ausgebildete zweite Verdichter von der Hochdruckturbine (6) über ein zweites Untersetzungsgetriebe (21, 22, 23, 24) angetrieben wird.

2. Turbomaschine mit optimiertem Verdichtungssystem mit einer Hochdruckturbine, die einen als Hochdruckverdichter ausgebildeten ersten Verdichter antreibt, **dadurch gekennzeichnet, daß** sie außerdem einen von einer von einer Niederdruckturbine (7) über ein erstes Untersetzungsgetriebe (15, 16, 17, 18) angetriebenen Bläser (31) und wenigstens einen als Niederdruckverdichter ausgebildeten zweiten Verdichter (1) aufweist, der von der Hochdruckturbine (6) über ein zweites Untersetzungsgetriebe (21, 22, 23, 24) angetrieben wird.

3. Turbomaschine nach Anspruch 2, **dadurch gekennzeichnet, daß** der Bläser (31) von der Niederdruckturbine (7) direkt angetrieben wird.

4. Turbomaschine mit optimiertem Verdichtungssystem mit einer Hochdruckturbine, die einen ersten Hochdruckverdichter antreibt, und mit einem von einer Niederdruckturbine (7) über ein erstes Untersetzungsgetriebe (15, 16, 17, 18) angetriebenen Propeller (9), **dadurch gekennzeichnet, daß** sie außerdem einen als Mitteldruckverdichter ausgebildeten zweiten Verdichter (32) aufweist, der von der Hochdruckturbine (6) über ein zweites Untersetzungsgetriebe (21, 22, 23, 24) angetrieben wird.

5. Turbomaschine nach Anspruch 1, **dadurch gekennzeichnet, daß** sie einen als Niederdruckverdichter ausgebildeten zweiten Verdichter (40) und einen als Mitteldruckverdichter ausgebildeten dritten Verdichter (41) aufweist, wobei der zweite und der dritte Verdichter von der Hochdruckturbine (6) über ein zweites Untersetzungsgetriebe angetrieben werden.

6. Turbomaschine nach einem der Ansprüche 1 bis 5, **dadurch gekennzeichnet, daß** das zweite Untersetzungsgetriebe in dem vorderen Gehäuse der Turbomaschine angeordnet ist.

7. Turbomaschine nach einem der Ansprüche 4 oder 5, **dadurch gekennzeichnet, daß** das zweite Untersetzungsgetriebe zwischen dem Mitteldruckverdichter und dem Hochdruckverdichter angeordnet ist.

## Claims

1. Turbomachine with optimized compression system comprising a high-pressure turbine driving a first high-pressure compressor, a propeller (9) driven by a low-pressure turbine (7) via a first speed reducer (15, 16, 17, 18) and at least one second low-pressure compressor (1), **characterized in that** the second low-pressure compressor is driven by the high-pressure turbine (6) via a second speed reducer (21, 22, 23, 24).

2. Turbomachine with optimized compression system comprising a high-pressure turbine driving a first high-pressure compressor, **characterized in that** it further comprises a fan (31) driven by a low-pressure turbine (7) via a first speed reducer (15, 16, 17, 18) and at least one second low-pressure compressor (1), driven by the high-pressure turbine (6) via a second speed reducer (21, 22, 23, 24).

3. Turbomachine according to Claim 2, **characterized in that** the fan (31) is driven directly by the low-pressure turbine (7).

4. Turbomachine with optimized compression system comprising a high-pressure turbine driving a first high-pressure compressor, a propeller (9) driven by a low-pressure turbine (7) via a first speed reducer (15, 16, 17, 18), **characterized in that** it comprises at least one second medium-pressure compressor (32) driven by the high-pressure turbine (6) via a second speed reducer (21, 22, 23, 24).

5. Turbomachine according to Claim 1, **characterized in that** it comprises a second low-pressure compressor (40) and a third medium-pressure compressor (41), the second and third compressors being driven by the high-pressure turbine (6) via the second speed reducer.

6. Turbomachine according to any one of Claims 1 to 5, **characterized in that** the second speed reducer is located in a front housing of the turbomachine.

7. Turbomachine according to either one of Claims 4 and 5, **characterized in that** the second speed reducer is located between the medium-pressure and high-pressure compressors.
